# EUROPÄISCHE PATENTANMELDUNG

(11) **EP 0 559 030 A1**
(43) Veröffentlichungstag der Anmeldung: **08.09.1993**
(21) Anmeldenummer: 93102663.7
(22) Anmeldetag: 19.02.1993
(51) Int. Cl.: B29C 63/00, B29C 63/30

(54) **Anpressvorrichtung für Folien, insbesondere aus Gummi**

(30) Priorität: 05.03.1992 DE 4206935
(71) Anmelder: Keramchemie GmbH, D-56427 Siershahn (DE)
(72) Erfinder: Franz, Martin, W-5433 Siershahn (DE)
(74) Vertreter: Kossobutzki, Walter, Dipl.-Ing.(FH)

(57) **Zusammenfassung**

Die Erfindung bezieht sich auf eine Vorrichtung zum Anpressen einer insbesondere aus Gummi bestehenden Folie an die Wandung eines Behälters oder dgl. aus Stahl oder Beton, bestehend aus einer durch einen Antrieb drehbaren und von Hand gegen die aufgeklebte Folie andrückbaren Scheibe (3) mit mindestens drei innerhalb deren freier Stirnfläche mit Abstand voneinander drehbar gelagerten Kugeln (4), die um einen geringen Betrag über die freie Stirnfläche der Scheibe hinausragen.

Um sicherzustellen, daß beim Betrieb der Vorrichtung immer die erforderliche Mindestanpreßkraft aufgebracht wird und dieselbe, in Abhängigkeit von der Folie und/oder dem Bindemittel verändert werden kann, befindet sich an der der Scheibe gegenüberliegenden Seite des Antriebes ein gegen die Kraft mindestens einer Druckfeder (11) in Richtung auf die Scheibe bewegbarer Druckgriff (8), in dessen Bewegungsbahn ein den Antrieb anschaltender Schalter (13) angeordnet ist.

## Beschreibung

Die Erfindung bezieht sich auf eine Vorrichtung zum Anpressen einer insbesondere aus Gummi bestehenden Folie an die Wandung eines Behälters oder dgl. aus Stahl oder Beton, bestehend aus einer durch einen Antrieb drehbaren und von Hand gegen die aufgeklebte Folie andrückbaren Scheibe mit mindestens drei innerhalb deren freier Stirnfläche mit Abstand voneinander drehbar gelagerten Kugeln, die um einen geringen Betrag über die freie Stirnfläche der Scheibe hinausragen.

In der chemischen Industrie werden metallische, insbesondere aus Stahl bestehende Bauteile, wie Behälter, Apparate und Rohre, eingesetzt, die zum Schutz vor dem Angriff aggressiver Medien mit einer Beschichtung versehen sind. Auch Behälter, beispielsweise Wannen, aus Beton können eine solche Beschichtung aufweisen. Derartige Beschichtungen bestehen hauptsächlich aus einer Folie aus Gummi, die entweder direkt unter Benetzung der Oberfläche mittels eines Lösungsmittels oder indirekt über eine Bindemittelschicht, beispielsweise aus einem Klebstoff, auf die Oberfläche des Bauteiles aufgebracht wird. Bei der Verwendung von Gummifolien kann sich noch ein besonderer Vulkanisationsvorgang anschließen.

Für die Qualität und die Haltbarkeit einer derartigen Beschichtung ist es von großer Bedeutung, daß die Folie möglichst gleichmäßig und mit einer vorbestimmten Mindestkraft gegen die zu beschichtende Fläche des Bauteiles angepreßt wird. Dies ist insbesondere dann wichtig, wenn keine Vulkanisation in einem Autoklav erfolgen kann und eine selbst vulkanisierende bzw. vorvulkanisierte Gummifolie zum Einsatz kommt. Stationäre Großbehälter werden mit derartigen Gummifolien ausgekleidet.

Bei der Beschichtung eines Bauteiles wird die Gummifolie immer abschnittsweise auf die zu beschichtende Fläche aufgebracht. Dazu wird dieser Abschnitt entweder mittels eines Lösungsmittels benetzt oder mit einer Klebstoffschicht versehen. Sodann wird die Folie bzw. der Folienabschnitt sorgfältig aufgelegt. Das anschließende Anpressen der Gummifolie erfolgt von Hand. Dazu wird eine Anpreßvorrichtung verwendet, wie sie beispielsweise aus der DE-OS 40 18 480 bekannt ist. Eine solche Anpreßvorrichtung besteht aus einer Winkelbohrmaschine, die einen elektrischen oder pneumatischen Antrieb besitzt und die bedarfsweise mit einem Schlagantrieb ausgerüstet sein kann. Die Winkelbohrmaschine ist an ihrer Werkzeugaufnahme mit einer Scheibe versehen, die an ihrer freien, der Werkzeugaufnahme abgewandten Fläche mit mindestens drei innerhalb deren freier Stirnfläche mit Abstand voneinander drehbar gelagerter Kugeln versehen ist, die um einen geringen Betrag über die freie Stirnfläche der Scheibe hinausragen. Dabei können die Kugeln auf einer Kreislinie oder auf einer Spirallinie angeordnet sein. Die Winkelbohrmaschine wird nun mit ihrer Scheibe gegen die aufgebrachte Gummifolie gedrückt und dann der Antrieb angeschaltet. Durch die Rotationsbewegung der Scheibe und die gleichzeitige Bewegung der Winkelbohrmaschine wird eine verhältnismäßig gute Anpreßung der Gummifolie erzielt.

Da das Anpressen der mit Kugeln ausgerüsteten, drehbaren Scheibe von Hand erfolgt, ist die Anpreßkraft zwangsläufig nicht immer gleichmäßig. In Abhängigkeit von der Qualität und der Dicke der Gummifolie und dem eingesetzten Bindemittel ist es erforderlich, die Anpreßkraft zu verändern. Dabei sollte immer sichergestellt sein, daß eine vorbestimmte Anpreßkraft niemals unterschritten wird. Diese Forderungen sind jedoch mit der vorbekannten Vorrichtung nicht in zufriedenstellender Weise erreichbar.

Der Erfindung liegt deshalb die Aufgabe zugrunde, eine Vorrichtung zum Anpreßen einer insbesondere aus Gummi bestehenden Folie an die Wandung eines Behälters oder dergleichen aus Stahl oder Beton zu schaffen, die sicherstellt, daß beim Betrieb der Vorrichtung immer die erforderliche Mindestanpreßkraft aufgebracht wird und die, in Abhängigkeit von der Folie und/oder dem Bindemittel, eine Veränderung der Mindestanpreßkraft ermöglicht.

Zur Lösung dieser Aufgabe wird gemäß der Erfindung bei einer Vorrichtung der eingangs beschriebenen Gattung vorgeschlagen, daß sich an der der Scheibe gegenüberliegenden Seite des Antriebes ein gegen die Kraft mindestens einer Druckfeder in Richtung auf die Scheibe bewegbarer Druckgriff befindet, in dessen Bewegungsbahn ein den Antrieb anschaltender Schalter angeordnet ist.

Eine derartig ausgebildete Vorrichtung stellt sicher, daß die Vorrichtung nur dann in Betrieb genommen werden kann, wenn der geforderte Anpreßdruck erreicht oder überschritten wurde. Durch Veränderung der Druckfeder und/oder des Federweges kann die vorgegebene Anpreßkraft leicht verändert und den gegebenen Bedingungen angepaßt werden.

Weitere Merkmale einer Vorrichtung gemäß der Erfindung sind in den Ansprüchen 2 - 9 offenbart.

Die Erfindung wird nachfolgend anhand eines in einer Zeichnung dargestellten Ausführungsbeispieles näher erläutert. Dabei zeigen
- Fig. 1: eine teilweise geschnittene Aufrißdarstellung einer Vorrichtung gemäß der Erfindung und
- Fig. 2: eine Seitenansicht der Vorrichtung der Fig. 1, ebenfalls im Schnitt.

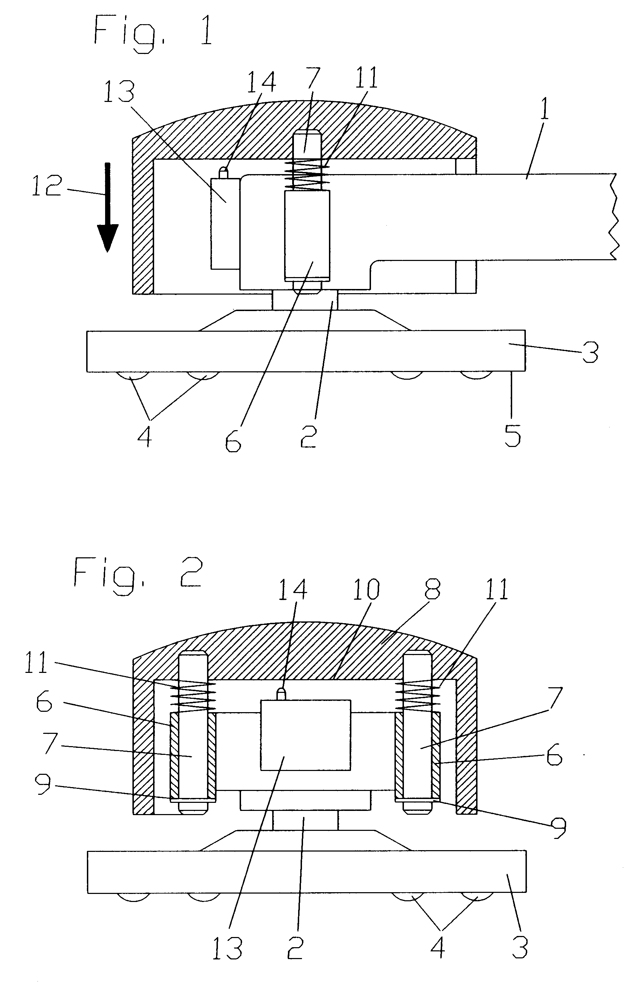

In den Fign. 1 und 2 der Zeichnung ist eine Vorrichtung gezeigt, mittels der eine nicht dargestellte Folie an die Wandung eines Behälters aus Stahl angepreßt wird. Dabei ist die Gummifolie mittels einer Klebstoffschicht auf der Wandung des Behälters gesichert.

Die Anpreßvorrichtung besteht aus einer nur teilweise gezeichneten Winkelbohrmaschine 1, an deren Werkzeugaufnahme 2 eine Scheibe 3 mit kreisförmigem Querschnitt gesichert ist. In diese Scheibe 3 sind im dargestellten Ausführungsbeispiel über jeweils ein nicht näher gezeichnetes Lagergehäuse mindestens sechs Kugelrollen 4 eingesetzt, die beispielsweise auf einer Kreislinie gleichmäßig verteilt, also mit gleichem Abstand voneinander angeordnet sind. Dabei sind die Kugeln 4 so in der Scheibe 3 angeordnet, daß die Kugeln 4 um ein vorgegebenes Maß über die Stirnfläche 5 der Scheibe 3, die der Werkezeugaufnahme 2 abgewandt ist, hinausragen.

Aus der Fig. 2 der Zeichnung ist ersichtlich, daß das Gehäuse der Winkelbohrmaschine 1 im Bereich der Werkzeugaufnahme 2 seitlich jeweils eine Führungshülse 6 trägt, deren Achsen parallel zur Achse der Werkzeugaufnahme 2 verlaufen. In jede Führungshülse 6 ist ein Zapfen 7 eingesteckt, die jeweils an einem Ende fest in einen Druckgriff 8 eingesetzt sind und an ihrem anderen Ende jeweils einen Sicherungsring 9 tragen, der sicherstellt, daß die Zapfen 7 nicht unbeabsichtigt aus den Führungshülsen 6 austreten. Zwischen den Führungshülsen 6 und der inneren Grundfläche 10 des Druckgriffes 8 ist um jeden Zapfen 7 eine beispielsweise vorgespannte Druckfeder 11 eingesetzt, wobei die beiden Druckfedern 11 sicherstellen, daß der Druckgriff 8 bei nicht benutzter Vorrichtung die in den Figuren 1 und 2 gezeigte Lage einnimmt. Die beiden Druckfedern 11 gestatten es, daß der Druckgriff 8 von Hand in Richtung auf die Winkelbohrmaschine 1 bzw. die Scheibe 3 verschoben werden kann, wie dies durch den Pfeil 12 angedeutet ist.

Innerhalb des Druckgriffes 8 ist am Gehäuse der Winkelbohrmaschine 1 ein Schalter 13 vorgesehen, der in vorteilhafter Weise als Mikroschalter ausgebildet ist. In Abhängigkeit vom Antrieb der Winkelbohrmaschine 1, der elektrisch oder pneumatisch sein kein, ist der Schalter 13 ebenfalls entweder elektrisch oder pneumatisch wirksam. Der Schalter 13 besitzt einen Taststift 14, der gegen die innere Grundfläche des Druckgriffes 8 gerichtet ist. In der dargestellten Lage des Druckgriffes 8 weist das freie Ende des Taststiftes 14 einen vorbestimmten Abstand von der inneren Grundfläche 10 des Druckgriffes 8 auf. Bei der Betätigung des Druckgriffes 8 und dessen Bewegung in Richtung des Pfeiles 12 kommt, nachdem ein vorbestimmter Weg zurückgelegt wurde, die innere Grundfläche 10 zunächst am Taststift 14 zum Anliegen. Bei einer weiteren Bewegung des Druckgriffes 8 wird der Taststift 14 ebenfalls bewegt, der dabei im Schalter 13 eine Steuerleitung öffnet. Diese nicht gezeichnete Steuerleitung ist in an sich bekannter Weise mit dem Antrieb der Winkelbohrmaschine 1 verbunden und schaltet denselben, der in üblicher Weise durch einen Handschalter voreingeschaltet wurde, endgültig an. Dies bedeutet, daß der Antrieb der Winkelbohrmaschine 1 nur dann angeschaltet wird, wenn die Scheibe 3 mit den Kugeln 4 mit einer genau vorgegebenen Mindestkraft bzw. einem Mindestdruck gegen die nicht gezeichnete Gummifolie angedrückt wird. Durch eine Veränderung der Höhenlage des Schalters 13 kann der Federweg des Druckgriffes 8 und damit die Anpreßkraft bzw. der Anpreßdruck verändert werden. Sobald die Kraft, die auf den Druckgriff 8 einwirkt, so weit nachläßt, daß sich die innere Grundfläche des Druckgriffes 8 vom Taststift 14 entfernt, wird der Antrieb der Winkelbohrmaschine 1 abgeschaltet. Dies stellt sicher, daß die Gummifolie immer mit der vorgegebenen Mindestanpreßkraft bzw. dem Mindestanpreßdruck an die Behälterwandung angedrückt wird.

Bedarfsweise ist es, in Abhängigkeit von der zu verarbeitenden Gummifolie und dem verwendeten Klebersystem möglich, die Druckfedern 11 durch Druckfedern mit einer anderen Federkennlinie zu ersetzen. Ferner ist es in Abänderung des erläuterten Ausführungsbeispieles möglich, die Ausbildung und die Führung des Druckgriffes 8 anders zu gestalten. Bedarfsweise kann auch die Anzahl der Druckfedern verändert werden.

## Patentansprüche

1. Vorrichtung zum Anpressen einer insbesondere aus Gummi bestehenden Folie an die Wandung eines Behälters oder dgl. aus Stahl oder Beton, bestehend aus einer durch einen Antrieb drehbaren und von Hand gegen die aufgeklebte Folie andrückbaren Scheibe mit mindestens drei innerhalb deren freier Stirnfläche mit Abstand voneinander drehbar gelagerten Kugeln, die um einen geringen Betrag über die freie Stirnfläche der Scheibe hinausragen,
dadurch gekennzeichnet,
daß sich an der der Scheibe (3) gegenüberliegenden Seite des Antriebes (1) ein gegen die Kraft mindestens einer Druckfeder (11) in Richtung auf die Scheibe (3) bewegbarer Druckgriff (8) befindet, in dessen Bewegungsbahn ein den Antrieb (1) anschaltender Schalter (13) angeordnet ist.

2. Vorrichtung nach Anspruch 1,
dadurch gekennzeichnet,
daß die Druckfeder (11) unter Vorspannung eingesetzt ist.

3. Vorrichtung nach Anspruch 2,
dadurch gekennzeichnet,
daß die Vorspannung der Druckfeder (11) einstellbar ist.

4. Vorrichtung nach mindestens einem der Ansprüche 1 - 3,
dadurch gekennzeichnet,
daß die Druckfeder (11) auswechselbar eingesetzt ist.

5. Vorrichtung nach mindestens einem der Ansprüche 1 - 4,
dadurch gekennzeichnet,
daß der Schalter (13) in der Bewegungsbahn des Druckgriffes (8) einstellbar angeordnet ist.

6. Vorrichtung nach mindestens einem der Ansprüche 1 - 5,
dadurch gekennzeichnet,
daß der Druckfeder (11) eine Druckmeßeinrichtung mit einer Anzeige zugeordnet ist.

7. Vorrichtung nach mindestens einem der Ansprüche 1 - 6,
dadurch gekennzeichnet,
daß der Schalter (13) als elektrischer oder pneumatischer Schalter ausgebildet ist.

8. Vorrichtung nach Anspruch 7,
dadurch gekennzeichnet,
daß der Schalter (13) als Mikroschalter ausgebildet ist.

9. Vorrichtung nach mindestens einem der Ansprüche 1 - 8,
dadurch gekennzeichnet,
daß der Druckgriff (8) schalenartig, beispielsweise hülsen- oder halbkugelartig, ausgebildet ist.
